(19) Europäisches Patentamt
European Patent Office
Office européen des brevets

(11) **EP 4 721 779 A1**

(12) **EUROPEAN PATENT APPLICATION**
published in accordance with Art. 153(4) EPC

(43) Date of publication:
08.04.2026 Bulletin 2026/15

(21) Application number: 24815280.3

(22) Date of filing: 21.05.2024

(51) International Patent Classification (IPC):
*A61M 1/18* (2006.01)    *B01D 63/02* (2006.01)
*B01D 69/08* (2006.01)   *B01D 71/06* (2006.01)
*B01D 71/68* (2006.01)   *D01F 6/00* (2006.01)

(52) Cooperative Patent Classification (CPC):
B01D 63/02; B01D 69/08; B01D 71/06;
B01D 71/68; D01F 6/00

(86) International application number:
PCT/JP2024/018575

(87) International publication number:
WO 2024/247796 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 JP 2023088309

(71) Applicant: Toray Industries, Inc.
Tokyo 103-8666 (JP)

(72) Inventors:
• OSUKA, Tomoaki
  Otsu-shi, Shiga 520-8558 (JP)
• HAYASHI, Akihiro
  Otsu-shi, Shiga 520-8558 (JP)
• UENO, Yoshiyuki
  Otsu-shi, Shiga 520-8558 (JP)

(74) Representative: Hoefer & Partner Patentanwälte
mbB
Pilgersheimer Straße 20
81543 München (DE)

(54) **POROUS HOLLOW FIBER MEMBRANE AND BLOOD PURIFICATION MODULE**

(57)    An object of the present invention is to provide a porous hollow fiber membrane, which is capable of maximizing the inner surface area per volume of the porous hollow fiber membrane to reduce the amount of blood drawn out while maintaining safety in a blood purification application. The present invention provides a porous hollow fiber membrane containing a hydrophilic polymer, in which the outline of the inner surface in a cross section perpendicular to the longitudinal direction has an irregular shape, and IDi that represents the diameter ($\mu$m) of an inscribed circle for the outline of the inner surface, and IDo that represents the diameter ($\mu$m) of a circumscribed circle for the outline of the inner surface, each satisfy the following relationships: $95 \leq IDi \leq 1500$; $100 \leq IDo \leq 1600$; and $1.05 \leq IDo/IDi \leq 1.60$.

【Fig 1】

**Description**

TECHNICAL FIELD

The present invention relates to a porous hollow fiber membrane and a blood purification module.

BACKGROUND ART

For a hollow fiber membrane, the inside and outside of the hollow are partitioned by the membrane, and in particular, a porous hollow fiber membrane that has a microporous structure is suitably used as a separation membrane that sieves a substance between the inside and the outside. For example, in a blood purification therapy such as a treatment for renal failure, the porous hollow fiber membrane is often used with the hollow fiber membrane filling the inside of a blood purification module for the purpose of removing uremic toxins and waste products in blood.

In the blood purification therapy, when a large amount of blood is taken out of a patient's body at a time, there is a possibility of causing side effects such as a decrease in blood pressure and anemia. Accordingly, there is demand for reducing as much as possible the amount of blood taken out of the patient's body, that is, the amount of blood drawn out.

In order to reduce the amount of blood drawn out, it is necessary to reduce the size of the blood purification module. However, reducing the module size also reduces the amount of the porous hollow fiber membrane that can be used for filling, thus decreasing the blood purification efficiency.

As described above, there is a certain trade-off between the blood purification efficiency and the amount of blood drawn out. As a means for getting out of this trade-off, for example, it is conceivable to increase the effective membrane area of the porous hollow fiber membrane.

As means for increasing the effective membrane area of the porous hollow fiber membrane, a porous hollow fiber membrane that prevents adhesion between hollow fibers (Patent Document 1) and a porous hollow fiber membrane that has a surface provided in a protruding shape (Patent Document 2) are known, for example.

PRIOR ART DOCUMENTS

PATENT DOCUMENTS

Patent Document 1: Japanese Patent No. 1783446
Patent Document 2: Japanese Patent Laid-open Publication No. S63-21914

SUMMARY OF THE INVENTION

PROBLEMS TO BE SOLVED BY THE INVENTION

However, when the outer surface of the hollow fiber is provided in a fin shape as in Patent Document 1, the fiber bundle becomes bulky, thereby decreasing the number of hollow fibers that can be used for filling the module, and there is a high possibility that the desired effective membrane area will fail to be secured.

In addition, such a protruding shape as in Patent Document 2 is a structure preferred for gas-liquid exchange applications such as oxygenators, but the risk of damaging blood cell components in blood due to collisions with the blood cell components is extremely increased when the protruding shape is applied to blood purification applications.

Accordingly, an object of the present invention is to provide a porous hollow fiber membrane, which is capable of maximizing the inner surface area per volume of the porous hollow fiber membrane with a simple structure. In particular, an object of the present invention is to provide a porous hollow fiber membrane for blood purification, capable of maximizing the inner surface area per volume of the porous hollow fiber membrane to reduce the amount of blood drawn out while maintaining safety in a blood purification application.

SOLUTIONS TO THE PROBLEMS

The present invention relates to:

(1) A porous hollow fiber membrane containing a hydrophilic polymer,

in which the outline of the inner surface in a cross section perpendicular to the longitudinal direction has an irregular shape, and

IDi that represents the diameter (μm) of an inscribed circle for the outline of the inner surface, and IDo that represents the diameter (μm) of a circumscribed circle for the outline of the inner surface, each satisfy the following relationships:

$$90 \leq IDi \leq 1500;$$

$$100 \leq IDo \leq 1600;$$

and

$$1.05 \leq IDo/IDi \leq 1.60.$$

(2) In the porous hollow fiber membrane containing the hydrophilic polymer, the IDi and the IDo each preferably satisfy the following relationships:

$$90 \leq IDi \leq 1000;$$

$$100 \leq IDo \leq 1100;$$

and

$$1.05 \leq IDo/IDi \leq 1.60.$$

(3) In the porous hollow fiber membrane according to (1) or (2), the outline of the inner surface preferably has 6 to 40 protrusions.

(4) In the porous hollow fiber membrane according to (3), the protrusions are preferably evenly present on the circumference of the circumscribed circle.

(5) In the porous hollow fiber membrane according to (1) or (2), the cross-sectional structure of the cross section perpendicular to the longitudinal direction exhibits an inner dense asymmetric structure.

(6) In the porous hollow fiber membrane according to (1) or (2), an amorphous polymer is preferably included as a main component.

(7) In the porous hollow fiber membrane according to (6), the amorphous polymer is preferably a polysulfone-based polymer.

(8) In the porous hollow fiber membrane according to (1) or (2), the average membrane thickness is preferably 10 to 80 μm.

(9) The porous hollow fiber membrane according to (1) or (2) is preferably used for blood purification.

(10) In addition, the present invention relates to a porous hollow fiber membrane module including the built-in porous hollow fiber membrane according to (1) or (2).

(11) Furthermore, the present invention relates to a porous hollow fiber membrane for blood purification,

in which the outline of the inner surface in a cross section perpendicular to the longitudinal direction has an irregular shape, and

IDi that represents the diameter (um) of an inscribed circle for the outline of the inner surface, and IDo that represents the diameter (μm) of a circumscribed circle for the outline of the inner surface, each satisfy the following relationships:

$$90 \leq IDi \leq 1500;$$

$$100 \leq IDo \leq 1600;$$

and

$$1.05 \leq IDo/IDi \leq 1.60.$$

(12) In the porous hollow fiber membrane for blood purification,
the IDi and the IDo each preferably satisfy the following relationships:

$$90 \leq IDi \leq 1000;$$

$$100 \leq IDo \leq 1100;$$

and

$$1.05 \leq IDo/IDi \leq 1.60.$$

(13) In addition, the present invention also relates to a porous hollow fiber membrane module for blood purification, including the built-in porous hollow fiber membrane for blood purification according to (11) or (12).

EFFECTS OF THE INVENTION

According to the present invention, the internal surface area per volume of the porous hollow fiber membrane can be maximized with the simple structure. In addition, in a blood purification application, it is possible to remarkably reduce the amount of blood drawn out while maintaining both the blood purification efficiency and the safety.

BRIEF DESCRIPTION OF THE DRAWINGS

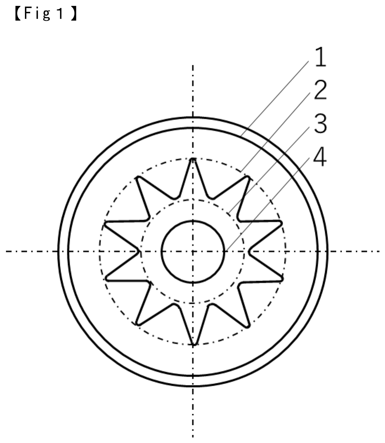

Fig. 1 is a schematic view showing an embodiment of an annular slit shape of a double tube spinneret for producing a hollow fiber membrane according to the present invention.

EMBODIMENTS OF THE INVENTION

A hollow fiber membrane can be produced, for example, by ejecting an injection liquid or an injection gas from an inner cylindrical tube of a double tube spinneret and discharging a spinning dope solution from an outer slit. In this regard, the structure of the hollow fiber membrane can be controlled by appropriately adjusting the spinning conditions such as the composition of the spinning dope solution and the type or temperature of the injection liquid or injection gas.
A porous hollow fiber membrane according to the present invention (hereinafter, referred to as a "hollow fiber membrane according to the present invention") is characterized in that the outline of the inner surface in a cross section perpendicular to the longitudinal direction has an irregular shape. The "irregular shape" herein refers to a shape other than a perfect circle. The irregular shape may be a shape that maintains symmetry such as line symmetry or point symmetry, or may be an asymmetric shape.
The hollow fiber membrane according to the present invention is characterized in that IDi that represents the diameter ($\mu$m) of an inscribed circle for the outline of the inner surface, and IDo that represents the diameter ($\mu$m) of a circumscribed circle for the outline of the inner surface, each satisfy the following relationships:

$$90 \leq IDi \leq 1500;$$

$$100 \leq IDo \leq 1600;$$

and

$$1.05 \leq IDo/IDi \leq 1.60.$$

In a case where the irregular shape is a shape that maintains symmetry, the inscribed circle is a circle inscribed in the outline of the irregular shape, and the circumscribed circle is a circle circumscribed about the outline of the irregular shape. Specifically, the inscribed circle or the circumscribed circle can be determined by observing a cross section perpendicular to the longitudinal direction of the hollow fiber membrane, selecting the respective apexes of recesses or protrusions of the outline of the inner surface of the hollow fiber membrane, and drawing an approximate circle with respect to the apexes.
In contrast, in a case where the irregular shape is an asymmetric shape, an inscribed circle and a circumscribed circle are defined as follows. The inscribed circle is a circle that is inscribed at least at two points in a curve that forms the outline of the inner surface of the hollow fiber membrane, is present only in the inner hollow of the hollow fiber membrane, and has the maximum possible diameter in the range in which the circumference of the inscribed circle does not intersect with the curve that forms the outline of the inner surface of the hollow fiber membrane. The circumscribed circle is a circle that is circumscribed at least at two points in a curve that represents the outline of the inner surface of the hollow fiber membrane, is present only outside the inner surface of the hollow fiber membrane, and has the minimum possible diameter in the range in which the circumference of the circumscribed circle does not intersect with the outline of the inner surface of the hollow fiber membrane.

IDi needs to be 90 $\mu$m or more for reducing the shear stress of a fluid such as blood flowing in the hollow fiber membrane and preventing activation of blood cell components and the like, and is preferably 120 $\mu$m or more, more preferably 150 $\mu$m or more. On the other hand, for improving the efficiency of removal by diffusion, IDi needs to be 1500 $\mu$m or less, and is preferably 1000 $\mu$m or less, further preferably 500 $\mu$m or less, more preferably 300 $\mu$m or less.

Also for the same reason, IDo needs to be 100 $\mu$m or more, and is preferably 120 $\mu$m or more, more preferably 150 $\mu$m or more. On the other hand, IDo needs to be 1600 $\mu$m or less, and is preferably 1100 $\mu$m or less, further preferably 600 $\mu$m or less, more preferably 400 $\mu$m or less.

The value obtained by dividing IDo by IDi, that is, "IDo/IDi" needs to be 1.05 or more for increasing the effective membrane area of the inner surface of the hollow fiber membrane, and is preferably 1.08 or more, more preferably 1.10 or more. On the other hand, for preventing adhesion of platelets to recesses of the inner surface, and the like, IDo/IDi needs to be 1.60 or less, and is preferably 1.50 or less, more preferably 1.40 or less.

The difference between IDo and IDi is preferably 5 $\mu$m or more, more preferably 10 $\mu$m or more for increasing the effective membrane area of the inner surface of the hollow fiber membrane. On the other hand, for preventing adhesion of platelets and the like to recesses of the inner surface, the difference is preferably 100 $\mu$m or less, more preferably 80 $\mu$m or less.

When the region surrounded by the inscribed circle and the region surrounded by the circumscribed circle are represented respectively by IAi and IAo, the cross-sectional area ratio R of the porous hollow fiber membrane in a region IAm obtained by excluding the IAi from the IAo is preferably 0.35 to 0.75. The cross-sectional area ratio R is more preferably 0.40 or more for improving the effective membrane area of the inner surface of the hollow fiber membrane. On the other hand, the cross-sectional area ratio R is more preferably 0.60 or less for preventing blood stagnation and the like in recesses of the inner surface.

In the hollow fiber membrane of the present invention, the outline of the inner surface preferably has 6 to 40 protrusions. Regarding the recesses and protrusions of the outline of the inner surface, in a cross section perpendicular to the longitudinal direction of the hollow fiber membrane, a part protruded toward the center of the cross section and a part recessed toward the center of the cross section are referred to respectively as a protrusion and a recess. The number of protrusions of the outline of the inner surface is preferably 6 or more, more preferably 8 or more for increasing the effective membrane area of the inner surface of the hollow fiber. On the other hand, the number is preferably 40 or less, more preferably 36 or less from viewpoints such as preventing adhesion and contact between the protrusions, and limiting the processing accuracy of the spinneret.

The protrusions are preferably evenly present on the circumference of the circumscribed circle. With the protrusions evenly present, structural unevenness of the hollow fiber membrane can be reduced, and the performance of the hollow fiber membrane is stabilized. "Being evenly present" herein means that each of the protrusions has substantially point symmetry. For example, the coefficient of variation is preferably 0.3 or less, more preferably 0.2 or less for a group of values obtained by measuring the respective distances between the apexes of adjacent protrusions.

The average membrane thickness of the hollow fiber membrane according to the present invention is preferably 10 to 80 $\mu$m. The "average membrane thickness" herein refers to the average value of the maximum value and minimum value of the membrane thickness in the hollow fiber membrane. For securing membrane strength that can withstand the working pressures in blood purification applications and the like, the average membrane thickness of the hollow fiber membrane is preferably 10 $\mu$m or more, more preferably 20 $\mu$m or more. On the other hand, for reducing the permeation resistance, the average membrane thickness is preferably 80 $\mu$m or less, more preferably 60 $\mu$m or less.

The degree of irregularity of the hollow fiber membrane according to the present invention is preferably 1.05 to 2.00. The "degree of irregularity" herein refers to a value obtained by dividing the perimeter of the inner surface in a cross section perpendicular to the longitudinal direction of the hollow fiber membrane by the average value of IDi and IDo. The degree of irregularity of the hollow fiber membrane is preferably 1.05 or more, more preferably 1.10 or more for increasing the effective membrane area of the inner surface of the hollow fiber. On the other hand, the degree of irregularity is preferably 2.00 or less, more preferably 1.80 or less for preventing blood stagnation and the like.

The hollow fiber membrane according to the present invention has a large number of pores therein. The average pore radius of the internal pores is preferably 1.0 nm or more, more preferably 1.5 nm or more for improving the permeation performance. On the other hand, for preventing useful substances such as antibodies and albumin in blood from being removed from the blood, for example, in use for blood purification applications, the average pore radius is preferably 90 nm or less, more preferably 60 nm or less.

The permeability of the hollow fiber membrane is greatly affected by the porosity of the inner surface. In the hollow fiber membrane according to the present invention, the porosity of the inner surface is preferably 2% or more, more preferably 3% or more, still more preferably 4% or more for widening the flow path through which substances can permeate to reduce the permeation resistance. On the other hand, for more easily controlling the pore diameters, the porosity of the inner surface is preferably 30% or less, more preferably 25% or less. Further, the porosity of the inner surface can be calculated by observing the surface of the hollow fiber membrane with a scanning electron microscope (SEM) and analyzing the image. The observation magnification and conditions in that regard may be appropriately determined depending on the states of pores at the surface, and, for example, the porosity can be determined in a way that an image observed at a magnification of 50,000 times is subjected to image processing in an arbitrary range of $2.5\ \mu m \times 1.9\ \mu m$, the structural part and pore part of the membrane are subjected to binarization processing, and the area percentage of the pore part to the measurement area is calculated.

The hollow fiber membrane has, as cross-sectional structures perpendicular to the longitudinal direction, a symmetrical structure in which the pore diameters do not substantially vary in the thickness direction of the hollow fiber membrane, and an asymmetric structure in which the pore diameters vary continuously or discontinuously in the thickness direction. The hollow fiber membrane according to the present invention preferably exhibits an inner dense asymmetric structure in which the inner pore diameter is smaller than the outer pore diameter in the direction of membrane thickness in a cross section perpendicular to the longitudinal direction. The hollow fiber membrane that exhibits the asymmetric structure allows a layer with small pore diameters, which contributes to size exclusion, to be made thinner, thus allowing the water permeability to be enhanced while reducing the water permeation resistance. In addition, the hollow fiber membrane for blood purification often causes blood components to pass through the inside of the hollow fiber, and thus preferably exhibits the inner dense asymmetric structure, also for prevention of fouling on the inner surface of the hollow fiber.

The main component of the hollow fiber membrane according to the present invention is preferably an amorphous polymer. The amorphous polymer herein refers to a polymer that is not crystallized, and more specifically, a polymer that shows no exothermic peak due to crystallization in measurement with a differential scanning calorimeter. It is to be noted that the "main component of the hollow fiber membrane" refers to a component that is most frequently detected when the hollow fiber membrane is analyzed by infrared spectroscopy or mass spectrometry. The method for the component analysis is not particularly limited, but infrared spectroscopy, mass spectrometry, or the like is suitably used.

Examples of the amorphous polymer include a polystyrene, a polycarbonate, a polyacrylonitrile, a polymethyl methacrylate, a polyvinyl chloride, and a polysulfone, and a polysulfone that has pore sizes easily controlled is preferred.

Examples of the polysulfone include "Udel" (registered trademark) polysulfone P-1700 or P-3500 (manufactured by Solvay) and "Ultrason" (registered trademark) S3010 or S6010 (manufactured by BASF).

For producing the hollow fiber membrane according to the present invention, for example, the shape of the discharge port of the double tube spinneret is important. For example, the shape of an inner frame 3 of the double tube spinneret is an irregular shape as shown in Fig. 1, thereby allowing a hollow fiber membrane that has an inner surface with an irregular outline according to the present invention to be obtained.

Examples of the method for producing the hollow fiber membrane according to the present invention include a production method including a discharging step of discharging a spinning dope solution from a slit formed in a double tube spinneret, a cooling step of causing the spinning dope solution to pass through a dry section including a gas phase, and a solidifying step of solidifying the spinning dope solution in a solidification bath after the cooling step. In the case of inducing phase separation with heat, examples thereof include a method of rapid cooling in the solidifying step. In the case of inducing phase separation with a poor solvent, examples thereof include a method of discharging, as an injection liquid, the poor solvent for the main component of the spinning dope solution, and further solidifying in a solidification bath containing the poor solvent for the main component. In the case of inducing phase separation with the poor solvent, the poor solvent is supplied by diffusion in the direction of the membrane thickness, a difference in the concentration of the poor solvent is thus caused in the direction of the membrane thickness, and the hollow fiber membrane is thus likely to have the asymmetric structure. Accordingly, the solidification liquid containing the poor solvent and the spinning dope solution are preferably brought into contact with each other in the dry section. In this regard, when a good solvent is added to the solidification liquid to adjust the concentration of the poor solvent, the solidification property is changed, thereby the pore sizes of the surface to be made appropriate while maintaining the spinnability.

The "poor solvent" herein refers to a solvent that does not dissolve the main component of the spinning dope solution at the temperature of the double tube spinneret in the discharging step. When the main component of the spinning dope solution is a polysulfone, water is preferred as the poor solvent. Further, as the good solvent, for example, N,N-dimethylacetamide is preferred. The concentration of the good solvent is preferably 40% by mass to 80% by mass, more preferably 50% by mass to 70% by mass.

The temperature of the double tube spinneret in the discharging step affects the viscosity of the spinning dope solution and the phase separation behavior of the hollow fiber membrane. In general, the water permeability and molecular weight cut-off of the obtained porous membrane are increased as the temperature of the spinneret is increased, but for maintaining the spinnability, the temperature of the double tube spinneret is preferably 90°C or lower. On the other hand, for preventing adhesion of moisture to the double tube spinneret due to dew condensation, the temperature of the double tube spinneret is preferably 20°C or higher.

The temperature of the solidification bath in the solidifying step preferably falls within the range of 20°C to 90°C.

The hollow fiber membrane after the solidifying step is preferably caused to pass through a water washing bath for removing a residual solvent and the like. The temperature of the water washing bath is preferably 60°C to 90°C for enhancing the washing efficiency.

The hollow fiber membrane may be further dried. Examples of the drying method include drying with hot air, drying with microwaves, and drying under reduced pressure, and drying with hot air is preferred.

When the hollow fiber membrane is dried, a crimp is provided to improve the dialysate flow when the hollow fiber membrane is built in a module, which is preferred. The pitch of the crimp preferably falls within the range of 5 to 30 mm, and the amplitude thereof preferably falls within the range of 0.2 to 3 mm.

When the hollow fiber membrane is not dried, the hollow fiber membrane may be impregnated with a moisturizing component for maintaining the pore diameters. The impregnation with the moisturizing component is preferably performed after causing the membrane to pass through the water washing bath. Examples of the moisturizing component include glycerin or an aqueous solution thereof.

A porous hollow fiber membrane module according to the present invention includes the built-in hollow fiber membrane according to the present invention.

Examples of the method for producing the porous hollow fiber membrane module include, for example, in the case of using the module in a blood purification application, a method of bundling a required number of hollow fiber membranes according to the present invention, cut into an appropriate length, placing the hollow fiber membranes in a cylindrical case, then potting both ends of the hollow fiber membranes with a potting agent, cutting both ends of the hollow fiber membranes such that openings are provided at the ends of the hollow fiber membranes, and then attaching headers to both ends. For uniform filling with the potting material, a method of injecting the potting agent while rotating the module containing the hollow fiber membrane with a centrifuge is preferred.

The blood volume ($cm^3/mm^2$) per membrane area of the hollow fiber membrane is preferably 1.0 to 1.9, more preferably 1.1 to 1.8. The blood volume per membrane area is 1.9 or less, thereby allowing the amount of blood drawn out to be reduced while improving the blood purification efficiency, and a contribution can be made to the circulatory dynamics stability of a patient. On the other hand, the blood volume per membrane area is 1.0 or more, thereby avoiding an increase in blood inflow linear velocity due to an excessive reduction in the diameter of the inner frame 3 of the hollow fiber double tube spinneret, and activation of blood cell components and the like can be prevented.

The hollow fiber membrane according to the present invention and the blood purification module including therein the built-in hollow fiber membrane obtained by the production method according to the present invention are used for blood purification applications such as artificial kidneys or blood component separators.

Accordingly, the hollow fiber membrane and the module are preferably excellent in biocompatibility. "Being excellent in biocompatibility" herein means, for example, that the number of adhering platelets is small when human blood is brought into contact with the inner surface of the hollow fiber. When the number of adhering platelets is small, platelets are not activated, and inflammatory reactions due to release of platelet activating factors or the like can be prevented. When human blood is brought into contact with the hollow fiber membrane, the number of adhering platelets is preferably $20/(5.2 \times 10^3\ \mu m^2)$ or less, more preferably $15/(5.2 \times 10^3\ \mu m^2)$ or less, still more preferably $10/(5.2 \times 10^3\ \mu m^2)$ or less.

The hollow fiber membrane according to the present invention preferably contains a hydrophilic polymer. The hydrophilic polymer in the dope solution for membrane formation functions, due to partial elution of the polymer, as a pore-forming agent, and the water permeability and hydrophilicity of the hollow fiber membrane can be expected to be improved by the remaining hydrophilic polymer. In the present invention, the hydrophilic polymer refers to a polymer that has a solubility of 1 g or more in 100 g of water at 20°C. The hydrophilic polymer is not particularly limited, but polyethylene glycols, polyvinyl alcohols, polyvinylpyrrolidones, carboxymethyl celluloses, polypropylene glycols, polyethyleneimines, and the like are used typically. In particular, in the case of using a polysulfone-based polymer as the amorphous polymer, a polyvinylpyrrolidone is suitably used from the viewpoint of compatibility and safety. The site of the hollow fiber membrane, containing the hydrophilic polymer, is not limited, and the hydrophilic polymer may be unevenly distributed on the surface or may be included in the entire membrane. In addition, the method for producing the hollow fiber membrane containing the hydrophilic polymer is not particularly limited, but there are typical methods such as a method of adding the hydrophilic polymer to the dope solution for membrane formation for the hollow fiber membrane, and a method of immersing the formed hollow fiber membrane in a solution containing the hydrophilic polymer to provide the surface of the hollow fiber membrane with the hydrophilic polymer. In the case of adding the hydrophilic polymer in the membrane - forming dope, the optimum added amount varies depending on the type and intended performance, but is preferably 1% by mass or more, and on the other hand, preferably 20% by mass or less. In addition, the hydrophilic polymer may be used alone, or two or more hydrophilic polymers may be used in mixture. Containing the hydrophilic polymer can be determined, for example, when a peak derived from the hydrophilic polymer component is detected with the use of X-ray electron spectroscopy.

For improving the biocompatibility of the hollow fiber membrane and preventing protein fouling, a specific polymer or the like may be present on the surface of the hollow fiber membrane as long as the performance of the hollow fiber membrane is not changed. Examples of the aspect in which a polymer is present on the surface of the hollow fiber membrane include coating the surface of the hollow fiber membrane with the polymer. Examples of the method for coating the surface of the hollow fiber membrane with a polymer include a method of adding a polymer to the spinning dope solution, a method of adding a polymer to the injection liquid in the discharging step, or a method of coating the surface with a polymer after the formation of the hollow fiber membrane. The solution for use in the coating is preferably water.

In addition, when a compound having an ester group is present on the surface of the hollow fiber membrane, adhesion of proteins and platelets is prevented, and thus, examples of the polymer include a carboxylic acid vinyl ester such as a vinyl acetate, an acrylic acid ester such as a methyl acrylate or methoxyethyl acrylate, a methacrylic acid ester such as a methyl methacrylate, an ethyl methacrylate, or a hydroxyethyl methacrylate, a polyvinyl alcohol with a saponification degree of less than 99%, and a vinylpyrrolidone-vinyl acetate copolymer, a vinylpyrrolidone-vinyl caprolactam copolymer, or a vinylpyrrolidone-vinyl alcohol copolymer, and a vinylpyrrolidone-vinyl acetate copolymer is preferred.

The polymer for use in the coating is preferably immobilized by chemical bonding on the surface of the hollow fiber membrane. Examples of the method for immobilizing the polymer by chemical bonding include a method in which a polymer is brought into contact with the hollow fiber membrane and then irradiated with radiation, and a method in which a reactive group such as an amino group or a carboxyl group is introduced onto both the coating polymer and the surface of the hollow fiber membrane to be immobilized, and the both are reacted.

The hollow fiber membrane according to the present invention has a variety of applications, which include, regardless of gas phase or liquid phase, various fluid filters, heat insulating materials, sound absorbing materials, impact cushioning materials, substrates for cell culture, carriers for regenerative medicine, and bioprocess applications. Furthermore, in medical applications, the hollow fiber membrane is suitably used for removing pathogenic proteins, bacteria, viruses, endotoxins, sugar chains, autoantibodies, immune complexes, free light chains, potassium, bilirubin, bile acids, creatinine, phosphorus compounds, drugs, and the like from blood, plasma, and body fluids, and suitably used, in particular, in blood purification applications. Additionally, in the case of using in water treatment applications, the hollow fiber membrane is suitably used for removing humic substances, metal corrosion products, and the like.

In the case of using the hollow fiber membrane module according to the present invention in medical applications, sterilization is required in advance, and radiation sterilization, which is low in residual toxicity and simple, is frequently used. Examples of the radiation for use in the radiation sterilization include $\alpha$-rays, $\beta$-rays, $\gamma$-rays, X-rays, ultraviolet rays, and electron beams, and $\gamma$-rays or electron beams are preferred, which are lower in residual toxicity and simple. In addition, when the hollow fiber membrane contains a polymer having a hydrophilic group, there is a possibility that the polymer will be eluted from the hollow fiber membrane afterward, but such a polymer can be immobilized on the inner surface of the hollow fiber membrane through a crosslinking reaction by irradiation with radiation. The irradiation dose is preferably 15 kGy to 100 kGy for preventing decomposition of the polymer and the like included in the hollow fiber membrane while securing the sterilization effect.

The water permeability of the hollow fiber membrane according to the present invention is preferably 100 to 3000 (mL/hr/m$^2$/mmHg), more preferably 200 to 2500 (mL/hr/m$^2$/mmHg) for reducing the risk of leakage of useful proteins and the like and the stimulation applied to blood cell components while securing sufficient permeation performance and a sufficient amount of filtration. The water permeability (UFR) can be calculated by the following formula (1).

$$\mathrm{UFR}\ (\mathrm{mL/hr/m}^2/\mathrm{mmHg})\ =\ \mathrm{Qw}/(\mathrm{P}\ \times\ \mathrm{T}\ \times\ \mathrm{A})\ \ldots\ (1)$$

where Qw is the volume of filtration (mL), T is the time of outflow (hr), P is the pressure (mmHg), and A is the inner surface area of the hollow fiber membrane (m$^2$).

EXAMPLES

(1) Observation of Cross Section of Hollow Fiber Membrane

Each of eight hollow fiber membranes randomly selected was cut at a random position to expose a cross section perpendicular to the longitudinal direction. In the case of measuring hollow fiber membranes with which a module is filled, eight hollow fiber membranes are randomly taken out after disassembling the module. Each of the cross sections was observed with a digital microscope (RH-2000; manufactured by HIROX Co., Ltd.), the diameter of the inscribed circle for the outline of the inner surface and the diameter of the circumscribed circle for the outline of the inner surface were measured, and the respective average values were calculated as IDi and IDo.

For the average membrane thickness of the hollow fiber membranes, each of the cross sections was observed with a digital microscope (RH-2000; manufactured by HIROX Co., Ltd.), the membrane thickness was measured at 60 sites evenly in the circumferential direction, and the maximum value and the minimum value were calculated. The maximum value and the minimum value were calculated for the eight hollow fiber membranes, the respective average values were calculated as the maximum value of the membrane thickness and the minimum value of the membrane thickness, and the average value of the two values was defined as the average membrane thickness of the hollow fiber membranes.

Regarding the number of irregularities, a point at which the inclination in the circumferential direction changes is counted as one on the outline of the inner surface, and the number of irregularities per circumference is calculated.

The cross-sectional area ratio R of the hollow fiber membrane in the region IAm obtained by excluding the region IAi surrounded by the inscribed circle from the region IAo surrounded by the circumscribed circle was calculated with the use of the following formula (2) with a hollow area IAs measured by tracing the outline of the inner surface of the hollow fiber membrane.

$$\text{Cross-sectional Area Ratio R= (IAo - IAs)/IAm ... (2)}$$

(2) Measurement of Water Permeability

A blood purification module was prepared by bundling forty hollow fiber membranes, filling a cylindrical case of 5 mm in diameter and 17 cm in length with the hollow fiber membranes, potting for the both ends thereof with an epoxy resin-based chemically reactive adhesive (manufactured by Konishi Co., Ltd.; "Quick Mender" (registered trademark)), and cutting both ends to provide openings the ends of the respective hollow fiber membranes. Next, the inside of the blood purification module was washed for 30 minutes with distilled water. Thereafter, the amount of water permeation per unit time, flowing out of the hollow fiber membranes, was measured with a water pressure of 100 mmHg applied to the inside of the hollow fiber membranes. It was determined that the amount of water permeation was preferably 4 to 30 mL, more preferably 5 to 20 mL.

(3) Measurement of Number of Adhering Platelets

A double-faced tape was attached to a circular plate made of polystyrene of 18 mm$\varphi$, and the hollow fiber membrane was fixed thereto. The fixed hollow fiber membrane was shaved and cut into a semi-cylindrical shape with a single edged knife to expose the inner surface of the hollow fiber membrane. The circular plate was attached to a "Falcon" (registered trademark) tube (18 mm$\varphi$, No. 2051, 3 cm in length) cut into a cylindrical shape such that the face with the hollow fiber membrane fixed thereto was located inside the tube, and the gap was filled with a parafilm. The inside of the tube was washed with physiological saline, and then filled with physiological saline. Immediately after collecting blood of an adult able-bodied person, a heparin sodium injection (manufactured by AY PHARMACEUTICALS CO., LTD.) was added thereto as an anticoagulant so as to reach 100 U/mL. Into the tube, 1.0 mL of the blood was added within 30 minutes after the blood collection, and shaken at a rotation speed of 700 rpm at 37°C for 1 hour. Thereafter, the inside of the tube was washed with 10 mL of physiological saline, and with the addition of 1 mL of physiological saline with 2.5% by volume of glutaraldehyde, the blood was left to stand to immobilize the blood component on the hollow fiber membrane. After a lapse of 1 hour, the hollow fiber membrane was taken out and washed with 20 mL of distilled water. The washed hollow fiber membrane was dried under reduced pressure at a room temperature (25°C) and 0.5 Torr for 10 hours. This hollow fiber membrane was attached to a sample stage of a scanning electron microscope with double-faced tape. Thereafter, on the inner surface of the hollow fiber membrane, a thin film of Pt-Pd was formed by sputtering to prepare a sample.

The surface of the sample was observed at a magnification of 1,500 times with a scanning electron microscope (manufactured by Hitachi High-Tech Fielding Corporation; S-3000), and the number of adhering platelets per visual field ($5.2 \times 10^3\ \mu m^2$) was counted. This procedure was repeated at 20 sites randomly selected, and the average value was defined as the number of adhering platelets.

(4) Calculation of Membrane Area and Blood Volume

The membrane area per unit length was calculated with the use of the following formula (3).

Membrane Area = (IDi + IDo)/2/1000000 $\times \pi \times$ degree of irregularity                    (3)

The blood volume per unit length was calculated with the use of the following formula (4).

$$\text{Blood Volume = [(IDi + IDo)/2/10000]^2} \times \pi \text{ ... (4)}$$

[Example 1]

To a mixed solvent of 77% by mass of N,N-dimethylacetamide and 1% by mass of water, 16% by mass of polysulfone ("Udel" (registered trademark) P-3500 manufactured by Solvay), 4% by mass of polyvinylpyrrolidone (K30 manufactured by International Specialty Products; hereinafter abbreviated by ISP), and 2% by mass of polyvinylpyrrolidone (K90 manufactured by ISP) were added, and the mixture was melted by heating at 90°C for 6 hours to obtain a spinning dope solution. This spinning dope solution was discharged from an annular slit (between an outer frame 1 of the double tube spinneret and the inner frame 3 of the double tube spinneret) of the double tube spinneret in the shape shown in Fig. 1. The outer diameter of the annular slit (the diameter of the outer frame 1 of the double tube spinneret) was 0.62 mm, the diameter of a circumscribed circle 2 on recesses of the inner frame 3 of the double tube spinneret was 0.45 mm, and the diameter of an inscribed circle 4 on protrusions of the inner frame 3 of the double tube spinneret was 0.25 mm. As an injection liquid, a solution including 63% by mass of N,N-dimethylacetamide and 37% by mass of water was discharged from the inner tube. The spinneret was kept at a temperature of 50°C. The discharged spinning dope solution was caused to pass through a dry section of 350 mm with a dew point of 26°C (temperature: 30°C, humidity: 80%) for 0.7 seconds, then guided to a water bath (solidification bath) at 40°C and solidified, then taken up at a speed of 30 m/minute with a first roller outside the solidification bath, washed in a water bath at 60°C, and then wound up. The amount of the spinning dope solution discharged and the amount of the injection liquid discharged were adjusted to obtain a porous hollow fiber membrane with an inner surface in an irregular shape. The hollow fiber diameter and the water permeability were measured for the obtained membrane, and the results are shown in Table 1.

In addition, a case of about 5 mm in diameter and 17 cm in length was filled with forty hollow fibers obtained, the both ends of the hollow fibers were fixed by potting to the ends of the case, the ends of the potting material were partially cut to provide openings at both sides for the hollow fiber membranes at the both ends, and headers were attached to the both sides of the case to provide a module. With the inflow of an aqueous solution of 0.1% by mass of vinylpyrrolidone/vinyl acetate (6/4) random copolymer (manufactured by BASF; "KOLLIDON" (registered trademark) VA64) for 2 minutes from the side of a treatment-target liquid inlet communicating with the hollow of the module, $\gamma$-ray irradiation was performed to obtain a hollow fiber membrane module. The obtained hollow fiber membrane module was disassembled, and the hollow fiber membranes were taken out and used for measuring the number of adhering platelets. The results are shown in Table 1.

[Example 2]

A hollow fiber membrane and a hollow fiber membrane module were obtained in the same manner as in Example 1 except that the spinneret was kept at 30°C. The evaluation results of the obtained hollow fiber membrane and hollow fiber membrane module are shown in Table 1.

[Example 3]

A hollow fiber membrane and a hollow fiber membrane module were obtained in the same manner as in Example 1 except that a solution including 50% by mass of N,N-dimethylacetamide and 50% by mass of water was used as an injection liquid. The evaluation results of the obtained hollow fiber membrane and hollow fiber membrane module are shown in Table 1.

[Example 4]

A hollow fiber membrane and a hollow fiber membrane module were obtained in the same manner as in Example 1 except that the outer diameter of the annular slit was 0.45 mm, the diameter of the circumscribed circle 2 on recesses of the inner frame 3 of the double tube spinneret was 0.35 mm, the diameter of the inscribed circle 4 on protrusions of the inner frame 3 of the double tube spinneret was 0.25 mm, and a solution including 60% by mass of N,N-dimethylacetamide and 40% by mass of water was used as an injection liquid. The evaluation results of the obtained hollow fiber membrane and hollow fiber membrane module are shown in Table 1.

[Example 5]

A hollow fiber membrane and a hollow fiber membrane module were obtained in the same manner as in Example 1 except that the number of protrusions of the annular slit was 20, the outer diameter thereof was 0.62 mm, the diameter of the circumscribed circle 2 on recesses of the inner frame 3 of the double tube spinneret was 0.39 mm, the diameter of the inscribed circle 4 on protrusions of the inner frame 3 of the double tube spinneret was 0.34 mm, and a solution including 60% by mass of N,N-dimethylacetamide and 40% by mass of water was used as an injection liquid. The evaluation results of the obtained hollow fiber membrane and hollow fiber membrane module are shown in Table 1.

[Comparative Example 1]

A hollow fiber membrane and a hollow fiber membrane module were obtained in the same manner as in Example 1 except that a spinneret in a perfect circle with an annular slit of 0.35 mm in outer diameter and 0.25 mm in inner diameter was used for the double tube spinneret. The evaluation results of the obtained hollow fiber membrane and hollow fiber membrane module are shown in Table 1.

[Comparative Example 2]

A hollow fiber membrane and a hollow fiber membrane module were obtained in the same manner as in Example 1 except that the spinneret was kept at 75°C. The evaluation results of the obtained hollow fiber membrane and hollow fiber membrane module are shown in Table 1.

[Comparative Example 3]

A hollow fiber membrane and a hollow fiber membrane module were obtained in the same manner as in Example 1 except that a solution including 42% by mass of N,N-dimethylacetamide and 58% by mass of water was used as an injection liquid. The evaluation results of the obtained hollow fiber membrane and hollow fiber membrane module are shown in Table 1.

[Table 1-1]

| | Example 1 | Example 2 | Example 3 | Example 4 |
|---|---|---|---|---|
| IDi [$\mu$m] | 179 | 144 | 169 | 169 |
| IDo [$\mu$m] | 214 | 172 | 227 | 202 |
| IDo/IDi | 1.20 | 1.19 | 1.34 | 1.20 |
| Cross-sectional Area Ratio R | 0.44 | 0.49 | 0.56 | 0.54 |
| Number of Protrusions | 10 | 10 | 10 | 10 |
| Coefficient of Variation in Distance between Apexes of Adjacent Protrusions | 0.15 | 0.16 | 0.19 | 0.15 |
| Main Component of Hollow Fiber Membrane | Polysulfone | Polysulfone | Polysulfone | Polysulfone |
| Average Membrane Thickness [$\mu$m] | 40 | 58 | 39 | 36 |
| Degree of Irregularity | 1.14 | 1.22 | 1.36 | 1.14 |
| Effective Membrane Area [$m^2$] | 0.0007 | 0.0006 | 0.0008 | 0.0007 |
| Blood Volume [$cm^3$] | 0.0012 | 0.0008 | 0.0012 | 0.0011 |
| Blood Volume per Membrane Area [$cm^3/mm^2$] | 1.72 | 1.30 | 1.46 | 1.63 |
| Amount of Water Permeation [mL] | 7.9 | 4.7 | 6.5 | 4.8 |
| Number of Adhering Platelets [$5.2 \times 10^3 \mu m^2$] | 1 | 1 | 2 | 1 |

[Table 1-2]

| | Example 5 | Comparative Example 1 | Comparative Example 2 | Comparative Example 3 |
|---|---|---|---|---|
| IDi [$\mu$m] | 173 | 200 | 203 | 144 |
| IDo [$\mu$m] | 184 | 200 | 212 | 233 |
| IDo/IDi | 1.06 | 1.00 | 1.04 | 1.62 |
| Cross-sectional Area Ratio R | 0.51 | - | 0.38 | 0.76 |
| Number of Protrusions | 20 | 0 | 10 | 10 |

(continued)

| | Example 5 | Comparative Example 1 | Comparative Example 2 | Comparative Example 3 |
|---|---|---|---|---|
| Coefficient of variation in Distance between Apexes of Adjacent Protrusions | 0.11 | - | 0.17 | 0.24 |
| Main Component of Hollow Fiber Membrane | Polysulfone | Polysulfone | Polysulfone | Polysulfone |
| Average Membrane Thickness [$\mu$m] | 42 | 40 | 51 | 56 |
| Degree of Irregularity | 1.07 | 1 | 1.02 | 1. 51 |
| Effective Membrane Area [$m^2$] | 0.0006 | 0.0006 | 0.0007 | 0.0009 |
| Blood Volume [$cm^3$] | 0.0010 | 0.0013 | 0.0014 | 0.0011 |
| Blood Volume per Membrane Area [$cm^3/mm^2$] | 1.67 | 2.00 | 2.03 | 1.25 |
| Amount of Water Permeation [mL] | 7.9 | 4.1 | 6.2 | 2.2 |
| Number of Adhering Platelets [$5.2 \times 10^3 \mu m^2$] | 1 | 1 | 2 | 21 |

DESCRIPTION OF REFERENCE SIGNS

1: Outer frame of double tube spinneret
2: Circumscribed circle on recesses of inner frame 3 of double tube spinneret
3: Inner frame of double tube spinneret
4: Inscribed circle on protrusions of inner frame 3 of double tube spinneret
5: Tube from which injection liquid is discharged
6: Injection liquid discharge part

**Claims**

1. A porous hollow fiber membrane comprising a hydrophilic polymer,

   wherein an outline of an inner surface in a cross section perpendicular to a longitudinal direction has an irregular shape, and
   IDi that represents a diameter ($\mu$m) of an inscribed circle for the outline of the inner surface, and IDo that represents a diameter ($\mu$m) of a circumscribed circle for the outline of the inner surface, each satisfy the following relationships:

$$90 \leq IDi \leq 1500;$$

$$100 \leq IDo \leq 1600;$$

   and

$$1.05 \leq IDo/IDi \leq 1.60.$$

2. The porous hollow fiber membrane according to claim 1, wherein the IDi and the IDo each satisfy the following relationships:

$$90 \leq IDi \leq 1000;$$

$$100 \leq IDo \leq 1100;$$

and

$$1.05 \leq IDo/IDi \leq 1.60.$$

3.   The porous hollow fiber membrane according to claim 1 or 2, wherein the outline of the inner surface has 6 to 40 protrusions.

4.   The porous hollow fiber membrane according to claim 3, wherein the protrusions are evenly present on a circumference of the circumscribed circle.

5.   The porous hollow fiber membrane according to claim 1 or 2, wherein a cross-sectional structure of the cross section perpendicular to the longitudinal direction exhibits an inner dense asymmetric structure.

6.   The porous hollow fiber membrane according to claim 1 or 2, comprising an amorphous polymer as a main component.

7.   The porous hollow fiber membrane according to claim 6, wherein the amorphous polymer is a polysulfone-based polymer.

8.   The porous hollow fiber membrane according to claim 1 or 2, wherein the porous hollow fiber membrane has an average membrane thickness of 10 to 80 $\mu$m.

9.   The porous hollow fiber membrane according to claim 1 or 2, wherein the porous hollow fiber membrane is used for blood purification.

10.   A porous hollow fiber membrane module comprising the built-in porous hollow fiber membrane according to claim 1 or 2.

11.   A porous hollow fiber membrane for blood purification,

wherein an outline of an inner surface in a cross section perpendicular to a longitudinal direction has an irregular shape, and
IDi that represents a diameter ($\mu$m) of an inscribed circle for the outline of the inner surface, and IDo that represents a diameter ($\mu$m) of a circumscribed circle for the outline of the inner surface, each satisfy the following relationships:

$$90 \leq IDi \leq 1500;$$

$$100 \leq IDo \leq 1600;$$

and

$$1.05 \leq IDo/IDi \leq 1.60.$$

12.   The porous hollow fiber membrane for blood purification according to claim 11, wherein the IDi and the IDo each satisfy the following relationships:

$$90 \leq IDi \leq 1000;$$

$$100 \leq IDo \leq 1100;$$

and

$$1.05 \leq IDo/IDi \leq 1.60.$$

13. A porous hollow fiber membrane module for blood purification, comprising the built-in porous hollow fiber membrane according to claim 11 or 12.

【Ｆ ｉ ｇ１ 】

## INTERNATIONAL SEARCH REPORT

| International application No. |
|---|
| **PCT/JP2024/018575** |

**A. CLASSIFICATION OF SUBJECT MATTER**

*A61M 1/18*(2006.01)i; *B01D 63/02*(2006.01)i; *B01D 69/08*(2006.01)i; *B01D 71/06*(2006.01)i; *B01D 71/68*(2006.01)i; *D01F 6/00*(2006.01)i

FI: A61M1/18 500; B01D63/02; B01D69/08; B01D71/06; B01D71/68; D01F6/00 B

According to International Patent Classification (IPC) or to both national classification and IPC

**B. FIELDS SEARCHED**

Minimum documentation searched (classification system followed by classification symbols)

A61M1/18; B01D63/02-04; B01D69/08; B01D71/06; B01D71/68; D01F6/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 59-62304 A (TEIJIN LIMITED) 09 April 1984 (1984-04-09) p. 1, lower left column, line 6 to p. 3, upper left column, line 15, p. 3, upper right column, lines 8-20, fig. 1 | 1-4, 9-13 |
| Y | | 5-8 |
| X | JP 2015-16400 A (MITSUBISHI RAYON CO., LTD.) 29 January 2015 (2015-01-29) paragraphs [0001], [0002], [0014]-[0028], fig. 1 | 1-2, 9-13 |
| Y | | 5-8 |
| Y | US 2015/0190757 A1 (MICRONEXT B.V.) 09 July 2015 (2015-07-09) paragraph [0028], fig. 2B | 5 |
| Y | JP 11-179174 A (TORAY INDUSTRIES, INC.) 06 July 1999 (1999-07-06) paragraph [0010] | 6-7 |

✓ Further documents are listed in the continuation of Box C.   ✓ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/018575**

| C. | DOCUMENTS CONSIDERED TO BE RELEVANT | |
|---|---|---|
| Category* | Citation of document, with indication, where appropriate, of the relevant passages | Relevant to claim No. |
| Y | JP 56-308 A (AKZO NV) 06 January 1981 (1981-01-06)<br>claims 5, 6 | 8 |

Form PCT/ISA/210 (second sheet) (July 2022)

**INTERNATIONAL SEARCH REPORT**
Information on patent family members

International application No.

**PCT/JP2024/018575**

| Patent document cited in search report | | | Publication date (day/month/year) | Patent family member(s) | | | Publication date (day/month/year) |
|---|---|---|---|---|---|---|---|
| JP | 59-62304 | A | 09 April 1984 | (Family: none) | | | |
| JP | 2015-16400 | A | 29 January 2015 | (Family: none) | | | |
| US | 2015/0190757 | A1 | 09 July 2015 | WO | 2014/014346 | A1 | |
| JP | 11-179174 | A | 06 July 1999 | (Family: none) | | | |
| JP | 56-308 | A | 06 January 1981 | GB | 2047874 | A | |
| | | | | claim 17 | | | |
| | | | | DE | 2833493 | A1 | |

Form PCT/ISA/210 (patent family annex) (July 2022)

**EP 4 721 779 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1783446 A
- JP 63021914 A